# EUROPÄISCHE PATENTSCHRIFT

(11) **EP 1 414 635 B1**
(45) Veröffentlichungstag und Bekanntmachung des Hinweises auf die Patenterteilung: **11.05.2005**
(21) Anmeldenummer: 02760101.2
(22) Anmeldetag: 18.07.2002
(51) Int. Cl.: B29C 45/18, B29C 45/58, B29C 44/34

(54) **SPRITZGIESSAGGREGAT MIT VORRICHTUNG ZUM MISCHEN UND DOSIEREN DER KUNSTSTOFFSCHMELZE SOWIE VON ZUSATZSTOFFEN**
INJECTION UNIT WITH A DEVICE FOR MIXING AND DOSING PLASTIC MELT AND ADDITIVES
GROUPE D'INJECTION AVEC DISPOSITIF POUR MELANGER ET DOSER LA MATIERE PLASTIQUE EN FUSION ET DES ADDITIFS

(30) Priorität: 28.07.2001 DE 10137073
(43) Veröffentlichungstag der Anmeldung: 06.05.2004
(73) Patentinhaber: Demag Ergotech GmbH, 90571 Schwaig (DE)
(72) Erfinder: SCHÜRMANN, Erich, 48324 Sendenhorst (DE)
(74) Vertreter: Wilhelm, Ludwig, Dipl.-Phys.
(86) Internationale Anmeldenummer: PCT/DE2002/002623
(87) Internationale Veröffentlichungsnummer: WO 2003/016020

(56) Entgegenhaltungen:
- DE-A- 1 903 540
- DE-U- 20 112 525
- US-A- 4 128 342
- PATENT ABSTRACTS OF JAPAN vol. 1998, no. 02, 30. Januar 1998 (1998-01-30) -& JP 09 277298 A (HITACHI LTD), 28. Oktober 1997 (1997-10-28)
- PATENT ABSTRACTS OF JAPAN vol. 2000, no. 11, 3. Januar 2001 (2001-01-03) -& JP 2000 218664 A (JAPAN STEEL WORKS LTD:THE), 8. August 2000 (2000-08-08)

## Beschreibung

Die Erfindung betrifft ein Spritzaggregat einer Spritzgießmaschine mit einer axial wie auch rotierend in einem Gehäuse angetriebenen, als Kolben/Schnecke ausgebildeten Spritzvorrichtung, die mit einer Rückstromsperre versehen ist, wobei die Spritzvorrichtung während des Transportes des Kunststoffgranulats der Plastifizierung dient und während des Einpressens der Kunststoffschmelze durch eine Düse in eine Spritzgießform als Kolben fungiert, und einer Vorrichtung zum Mischen und Dosieren der Kunststoffschmelze sowie von Zusatzstoffen, wie Farbmittel, Schäummittel, Gleitmittel od.dgl.

Es sind Spritzaggregate für Spritzgießmaschinen bekannt, bei denen die Zusatzstoffe bereits vor der Schnecke unter das Kunststoffgranulat gemischt werden.

Es sind Spritzgießaggregate bekannt, bei denen die Mischvorrichtung am Ende der Schnecke angeordnet ist. Die JP09277298 offenbart eine Vorrichtung, bei der die Schmelze durch die Rückbewegung der Schnecke während des Plastifizierens durch einen Kanal über ein ringförmiges Mischelement verteilt wird und in einen Schneckenvorraum innerhalb des ringförmigen Mischelementes gelangt und von diesem mittels der Schnecke in die Form gespritzt wird. Die JP2000218665 und JP2000218664 offenbaren weitere Mischvorrichtungen für das Einmischen von Modifikatoren oder Treibmitteln über Mischvorrichtungen am Ende der Schnecke. Das Dokument US4128342 zeigt eine Mischvorrichtung zum Einmischen von Additiven mittels rotierender und mit einer Schnecke bzw. einem Zylinder verbundener Mischteile.

Auch ist es bekannt, konventionelle Kolbenschneckenspritzgießaggregate mit separaten Dosier- und Mischvorrichtungen zu versehen. Diese Systeme haben jedoch erhebliche Probleme mit der dauerhaften Abdichtung der Wellen- und Kolbendurchführung, da hier Fügeflächen mit Relativbewegungen gegen Schmelzaustritte gedichtet werden müssen.

Die Aufgabe der Erfindung besteht darin, ein neues Spritzaggregat einer Spritzgießmaschine mit einer axial wie auch rotierend in einem Gehäuse angetriebenen als Kolben/Schnecke ausgebildeten Spritzvorrichtung zu schaffen, in die eine separate Dosier- und Mischvorrichtung für eine Zusatzstoffdosierung integriert wird, ohne dass bewegliche Teile nach außen gegen Schmelzaustritte gedichtet werden müssen. Des weiteren besteht die Aufgabe der Erfindung darin, den Aufbau zu vereinfachen und die Baugröße der Vorrichtung insgesamt zu verringern.

Die Lösung dieser Aufgabe ergibt sich aus den Merkmalen des Anspruchs 1, insbesondere des Kennzeichenteils, wonach zwischen der Rückstromsperre der Schnecke und dem Kolben ein Distanzelement angeordnet ist, dessen Länge wenigstens dem Hub des Spritzaggregats entspricht und das wenigstens einen Strömungskanal aufweist, durch den in jeder Stellung eine strömungstechnische Verbindung mit einem zunächst radial nach außen und dem parallel zum Bewegungs- und Führungsbereich des Kolbens bis in einen Bereich zwischen Düse und Kolben sich erstreckenden, weiteren Strömungskanal sichergestellt ist, und dass der Strömungskanal durch die benachbart zum Bewegungsund Führungsbereich des Kolbens angeordnete Misch- und Dosiervorrichtung verläuft.

Die erfindungsgemäße Vorrichtung weist zahlreiche Vorteile gegenüber dem Stand der Technik auf. So müssen einerseits keine beweglichen Teile nach außen gegen Schmelzaustritte abgedichtet werden, wodurch sich der konstruktive Aufwand verringert. Auch ergibt sich durch die koaxiale Bauweise der Misch- und Dosiervorrichtung ein geradliniger Kraftfluss bei gleichzeitig verringerter Baugröße.

Die Misch- und Dosiervorrichtung umgreift den Kolben zumindest teilweise kreisringförmig , wobei es in diesem Zusammenhang grundsätzlich möglich ist, dass die Misch- und Dosiervorrichtung bezüglich ihrer Rotationsbewegung mit der Spritzvorrichtung bewegungsverbunden ist.

Somit entfällt auf vorteilhafte Weise ein zusätzlicher Antrieb für die Misch- und Dosiervorrichtung, so dass die Vorrichtung insgesamt einfacher aufgebaut ist.

Die Misch- und Dosiervorrichtung wird aus Mischelementen, die an einem drehbaren, mit dem Kolben rotationsverbundenen Rohr und am Innendurchmesser des Gehäuses angeordnet sind, sowie mindestens einer Zusatzstoffeinspeisung gebildet. Hierbei ist die Misch- und Dosiervorrichtung sehr nahe an der Bewegungsbahn des Kolbens, jedoch getrennt von dieser angeordnet, was sich positiv auf die Baugröße auswirkt, wobei um den Bewegungsraum des Kolbens herum der Strömungskanal für die Schmelze durch die Misch- und Dosiervorrichtung hindurch verläuft.

Bei einer derartigen Misch- und Dosiervorrichtung können die Mischelemente beispielsweise unterschiedliche, gegenüberliegende Oberflächengestaltungen, insbesondere Verzahnungen aufweisen, durch die eine intensive Durchmischung der Schmelze mit den in der Mischund Dosiervorrichtung zugegebenen Zusatzstoffen erreicht wird.

Bei einer weiteren Ausführungsform der Erfindung ist das Distanzelement aus einer durchgehend verjüngten Welle gebildet, wobei der die Welle umgebende kreisringförmige Strömungsquerschnitt vollständig zum Transport der Schmelze von der Schnecke hin zur Misch- und Dosiervorrichtung zur Verfügung steht. Hierbei kann auf sehr einfache Weise der notwendige Bewegungsspielraum von Kolben und Schnecke geschaffen werden, ohne dass - unabhängig von der Stellung der Spritzvorrichtung - eine Unterbrechung des Strömungskanals für die Schmelze erfolgt.

Letztlich ist eine bevorzugte Ausführungsform der Erfindung so ausgestaltet, dass dem Bewegungsraum des Kolbens ein zusätzliches, zwischen Düsenbauteil und Gehäusebauteil angeordnetes Zwischenbauteil vorgeordnet wird, welches in x-Richtung einen erweiterten Sammelraum für die Schmelze darstellt, wobei der Kolben düsenseitig mit einer verjüngten Welle versehen ist, die dem Ausstoß der Schmelze dient.

Auch diese Ausführungsform weist den Vorteil auf, dass das "First in - first out-Prinzip" gewährleistet ist, da die Schmelzenbestandteile, die zuerst in den Sammelraum eintreten, letztlich auch als erstes durch die Düse in die Spritzgießform eingespritzt werden.

Ebenso wäre es bei einer weiteren Ausführungsform der Erfindung denkbar, dass das Distanzelement aus einer verjüngten Welle gebildet wird, deren Querschnitt sich ausgehend von der Schnecke zum Kolben hin leicht konisch verringert, wobei in geringem Abstand vom Bewegungsbereich des Kolbens im Gehäuse ein den kreisringförmigen Querschnitt verringernder Blendenring angeordnet ist und wobei die Welle mit wenigstens einer in Axialrichtung verlaufenden Durchgangsbohrung versehen ist, die einen aus der Schnecke herausführenden Strömungskanal mit einer kolbenseitigen, ringförmigen Einschnürung der Welle verbindet, die eine strömungstechnische Verbindung zwischen der Durchgangsbohrung und dem kreisringförmigen Strömungsquerschnitt herstellt.

Diese spezielle Lösung hat den Vorteil, dass auch bei vorgerückter Stellung der Kolben-/Schnedcenanordnung (Spritzvorrichtung) in dem der Schmelze zur Verfügung stehenden Strömungsquerschnitt keine Strömungstoträume entstehen, so dass das sogenannte "First in - first out-Prinzip" auch hier gewährleistet ist.
Letztlich betrifft die Erfindung auch eine Ausführungsform, bei der dem Bewegungsraum des Kolbens ein zusätzliches, eine Düse aufweisendes Gehäusebauteil vorgeordnet wird, welches einen erweiterten Sammelraum für die Schmelze darstellt, wobei der Kolben düsenseitig mit einer verjüngten Welle versehen ist, die dem Ausstoß der Schmelze dient.

Auch hier ist letztendlich auf vorteilhafte Weise der Grundsatz des "First in - first out" gewährleistet, da die Schmelzenbestandteile, die zuerst aus dem durch die Misch- und Dosiervorrichtung laufenden Strömungskanal in den Bereich vor den Kolben eintreten, beim späteren Ausstoß der Schmelze als erstes in die Spritzgießform eintreten, wobei in der jeweiligen zeitlichen Abfolge die nachfolgend aufgeschmolzenen Schmelzenbestandteile folgen.

Weitere Vorteile der Erfindung ergeben sich aus der nachfolgenden Beschreibung mehrerer Ausführungsbeispiele. Es zeigen:
Fig. 1 einen Längsschnitt durch eine erste Ausführungsform eines Spritzaggregats nach dem Ausstoß der Schmelze,

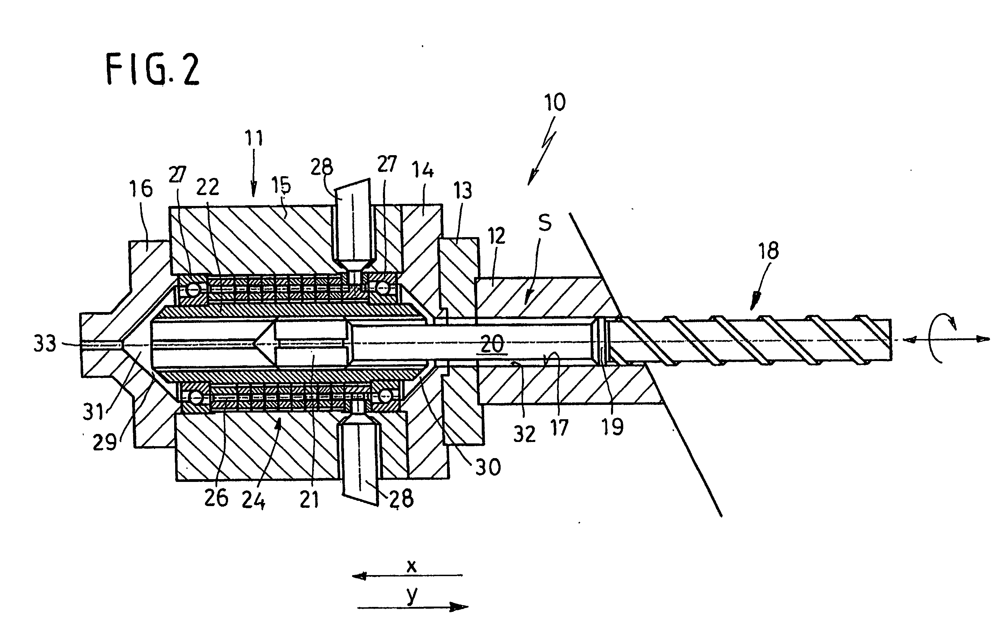

Fig. 2 einen Längsschnitt durch das Spritzaggregat gemäß Fig. 1 während des Auffüllens des vor dem Kolben angeordneten Sammelraumes für die Schmelze,
Fig. 3 einen Längsschnitt durch das Spritzaggregat gemäß den Fig. 1 und 2 mit gefülltem Sammelraum für die Schmelze,
Fig. 4 einen Längsschnitt durch eine zweite Ausführungsform eines Spritzaggregats nach dem Ausstoß der Schmelze,
Fig. 5 einen Längsschnitt durch das Spritzaggregat gemäß Fig. 4 während der Auffüllung des Sammelraums für die Schmelze,
Fig. 6 einen Längsschnitt durch das Spritzaggregat gemäß den Fig. 4 und 5 mit gefülltem Sammelraum für die Schmelze,
Fig. 7 einen Längsschnitt durch eine dritte Ausführungsform eines Spritzaggregats mit vorgeordnetem Gehäusebauteil,
Fig. 8 einen Längsschnitt durch das Spritzaggregat gemäß Fig. 7 während der Auffüllung des Sammelraums für die Schmelze und
Fig. 9 einen Längsschnitt durch das Spritzaggregat gemäß den Fig. 7 und 8 mit gefülltem Sammelraum für die Schmelze.

In den Zeichnungen wird ein Spritzaggregat einer Spritzgießmaschine insgesamt mit der Bezugsziffer 10 bezeichnet.

Das Spritzaggregat 10 weist ein Gehäuse 11 auf, welches aus den Bauteilen 12 bis 16 gebildet wird.

In den Bauteilen 12 und 13 ist ein kreiszylindrischer Führungskanal 17 angeordnet, in dem eine Schnecke 18 einer Spritzvorrichtung S drehbar und axial verschiebbar angeordnet ist. Die Schnecke 18 ist auf nicht dargestellte Weise an ihrem freien Ende mit einer Schubeinrichtung versehen. Am anderen Ende der Schnecke 18 ist eine Rückstromsperre 19 und daran anschließend eine verjüngte Welle 20 sowie ein Kolben 21 angeordnet. Der Kolben 21 ist längsverschieblich in einem sich mitdrehenden Rohr 22 angeordnet, an dessen Außenumfangsfläche wechselnde kreisringartige Mischelemente 23 einer Misch- und Dosiervorrichtung 24 angeordnet sind. Den Mischelementen 23 beabstandet gegenüberliegend sind weitere Mischelemente 25 am Bauteil 15 des Gehäuses 11 so befestigt, dass sich zwischen den Mischelementen 23 und 25 ein umlaufender kreisringförmiger Strömungskanal 26 ausbildet Die Einheit aus Kolben 21, Rohr 22 sowie Mischelementen 23 ist mit der verjüngten Welle sowie der Schnecke 18 fest bzw. formschlüssig verbunden und über Ringlager 27 innerhalb des Gehäuses 11 drehbar gelagert.

Letztlich weist die Misch- und Dosiervorrichtung 24 noch Vorrichtungen zur Zusatzstoffeinspeisung 28 auf, die innerhalb des Bauteils 15 angeordnet sind und deren Auslauf in den Strömungskanal 26 der Misch- und Dosiervorrichtung 24 münden.

Der Strömungskanal 26 der Misch- und Dosiervorrichtung 24 ist über radiale Strömungskanalbereiche 29 und 30 einerseits mit einem vor dem Kolben liegenden Sammelraum 31 für die Schmelze und andererseits über dem Strömungskanalbereich 30 mit einem die verjüngte Welle 20 umgebenden, ringraumartigen Strömungskanal 32 verbunden.

Letztlich weist das Bauteil 16 des Gehäuses 11 eine Düsenbohrung 33 auf, durch die die im Sammelraum 31 befindliche Schmelze in eine nicht dargestellte, dem Bauteil 16 vorgeordnete Spritzgießform eingespritzt werden kann.

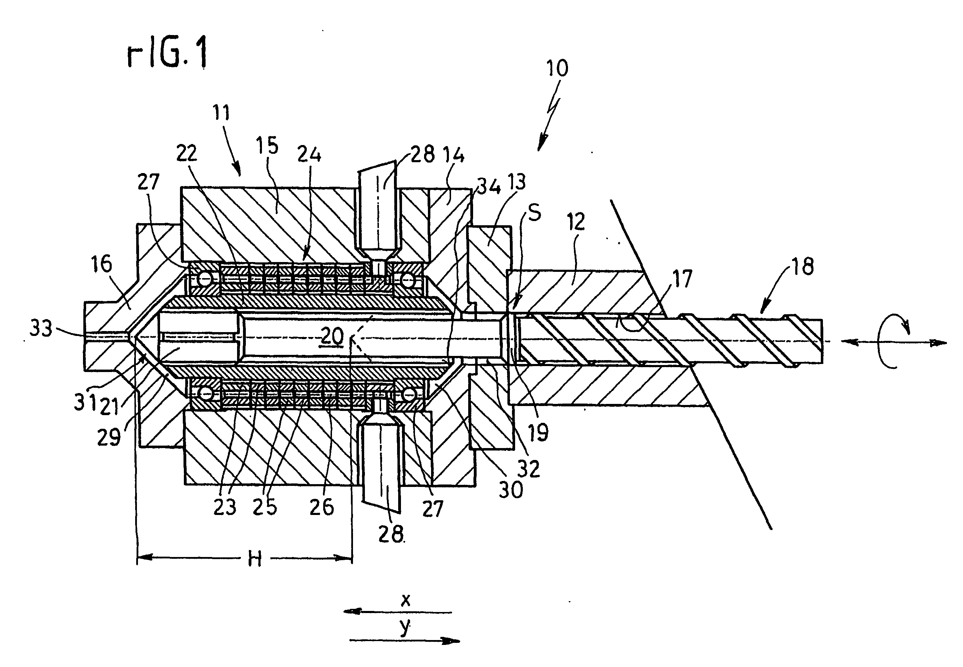

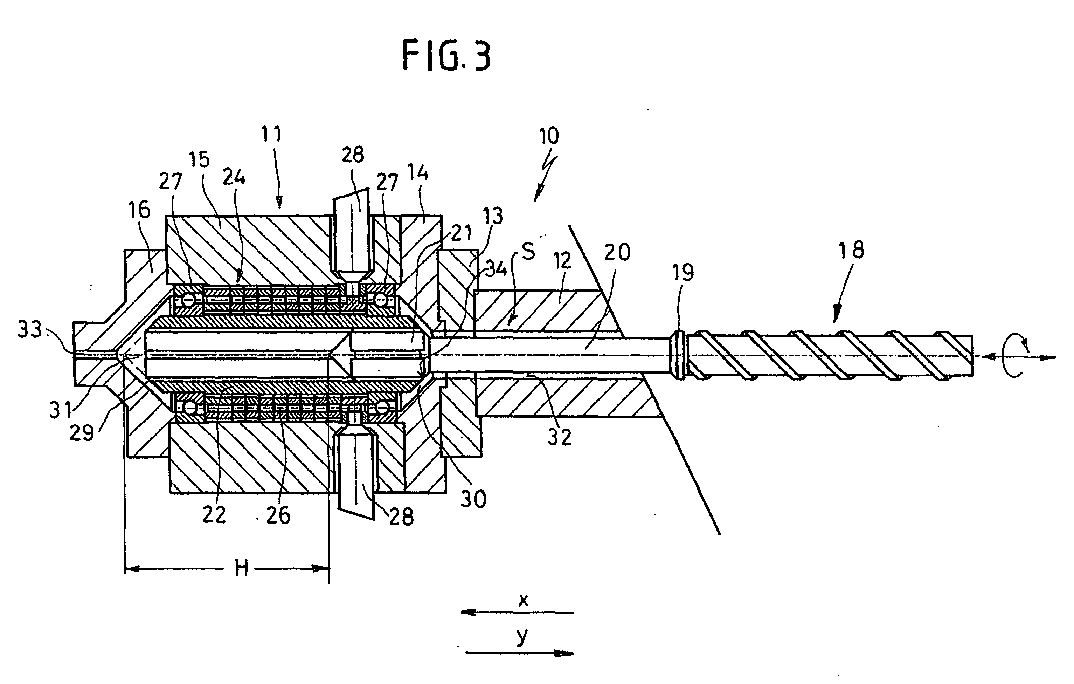

In der Fig. 1 ist die Stellung des Spritzaggregats 10 bzw. der Spritzvorrichtung S unmittelbar nach dem Einspritzvorgang dargestellt. Man erkennt, dass die Spritzvorrichtung S um einen maximalen Hub H in Richtung x bis vor die Düsenbohrung 33 vorgeschoben worden ist (s. Vergleich der Fig. 1 und 3). Dadurch wurde die Schmelze nahezu vollständig aus dem Sammelraum 31 in die nicht dargestellte Spritzgießform gedrückt. Nach dem die Schnecke 18 die Rotationsbewegungen wieder begonnen hat, wird zunehmend Material in der Schnecke 18 plastifiziert und dann über die Rückstromsperre 19 hinaus in den ringraumartigen Strömungskanal 32 und weiter über die Strömungskanalbereiche 30, 26 und 29 in den Sammelraum 31 für die Schmelze transportiert. Da die Misch- und Dosiervorrichtung 24 mit dem Kolben-/ Schneckenantrieb (Antrieb der Spritzvorrichtung S) rotationsverbunden ist, erfolgt während der Durchförderung der Schmelze bei gleichzeitiger Zuführung von Zusatzstoffen eine vollständige Durchmischung der Schmelze vor dem Eintritt der letzten in den Sammelraum 31.

Dadurch, dass zunehmend Schmelze in den Sammelraum 31 transportiert wird, ergibt sich gleichzeitig eine rückwärtige Bewegung der Spritzvorrichtung S bestehend aus dem Kolben 21 der verjüngten Welle 20 sowie der Schnecke 18 in y-Richtung. Dieser Vorgang ist erst dann abgeschlossen, wenn der Sammelraum 31 gefüllt ist und der Kolben 21 bei seiner Bewegung in y-Richtung an eine Schulter 34 stößt. Dies ist der Zeitpunkt, zu dem wiederum die nicht dargestellte Schubvorrichtung die Spritzvorrichtung S in x-Richtung bewegt, wobei während des Einspritzvorgangs die Rückstromsperre 19 ein Zurückströmen der Schmelze in die Schnecke 18 verhindert.

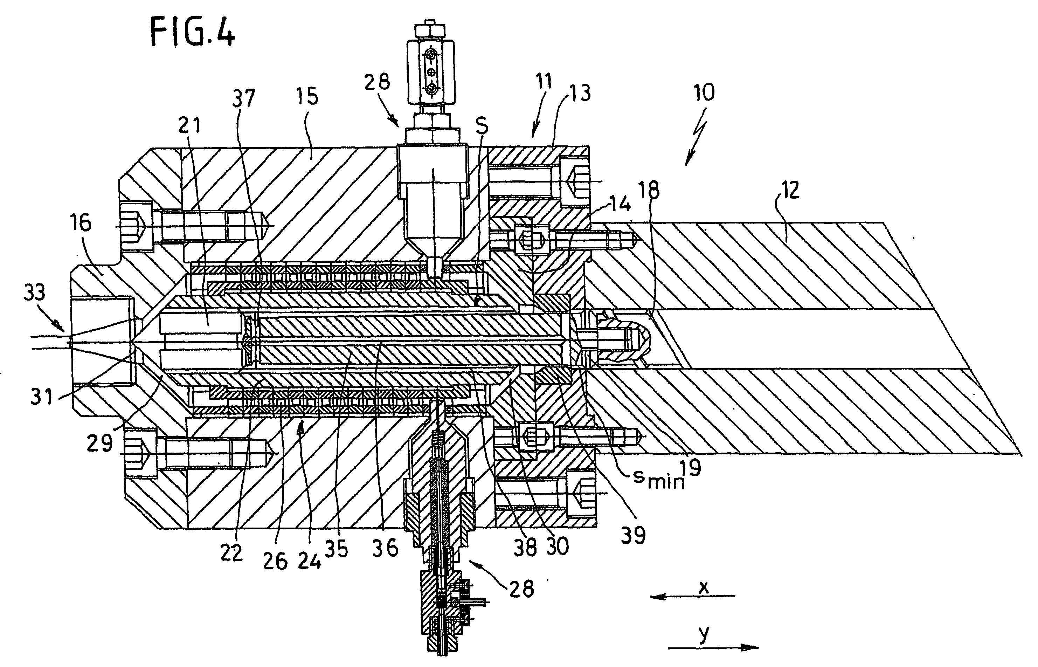

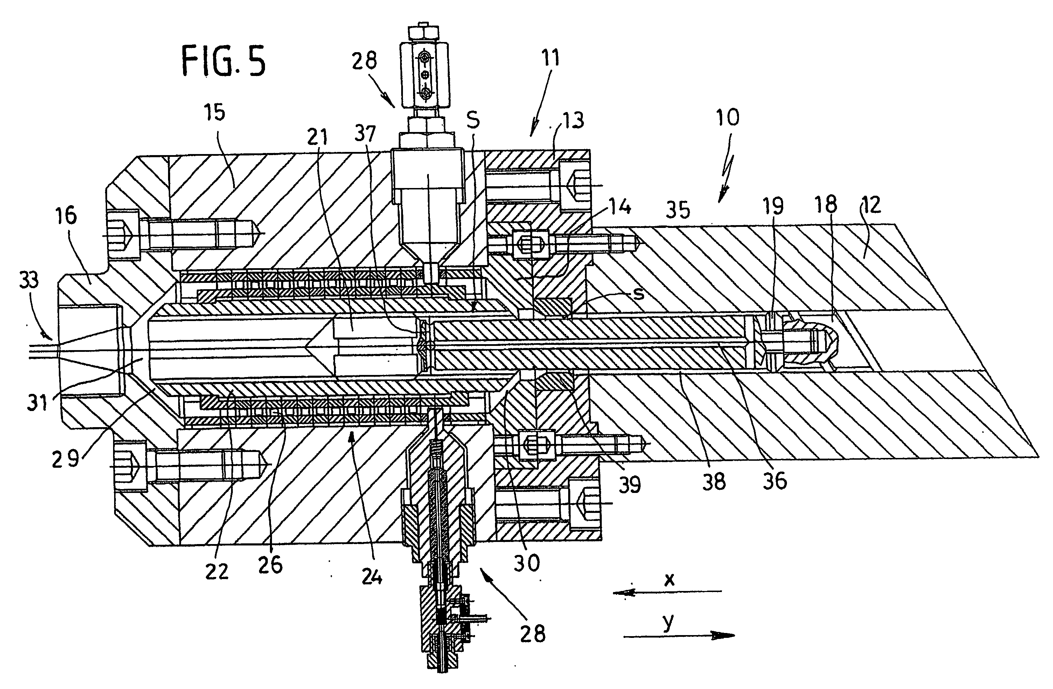

In den Fig. 4 bis 6 ist eine weitere Ausführungsform des Spritzaggregats 10 dargestellt. Die Veränderungen beziehen sich im Wesentlichen nur auf das zwischen dem Kolben 20 und der Schnecke 18 angeordnete Distanzelement, welches in diesem Fall ebenfalls in Form einer verjüngten, jedoch von der Rückstromsperre 19 hin zum Kolben 21 leicht konisch zusammenlaufenden Welle 35 gebildet wird. Diese Welle 35 weist eine mittige Durchgangsbohrung 36 auf, die im Bereich der Rückstromsperre 19 beginnt und am kolbenseitigen Ende der Welle 35 in einer ringförmigen Einschnürung 37 der Welle 35 endet, die eine strömungstechnische Verbindung zwischen der Durchgangsbohrung 36 und einem ringraumartigen Strömungskanal 38 herstellt.

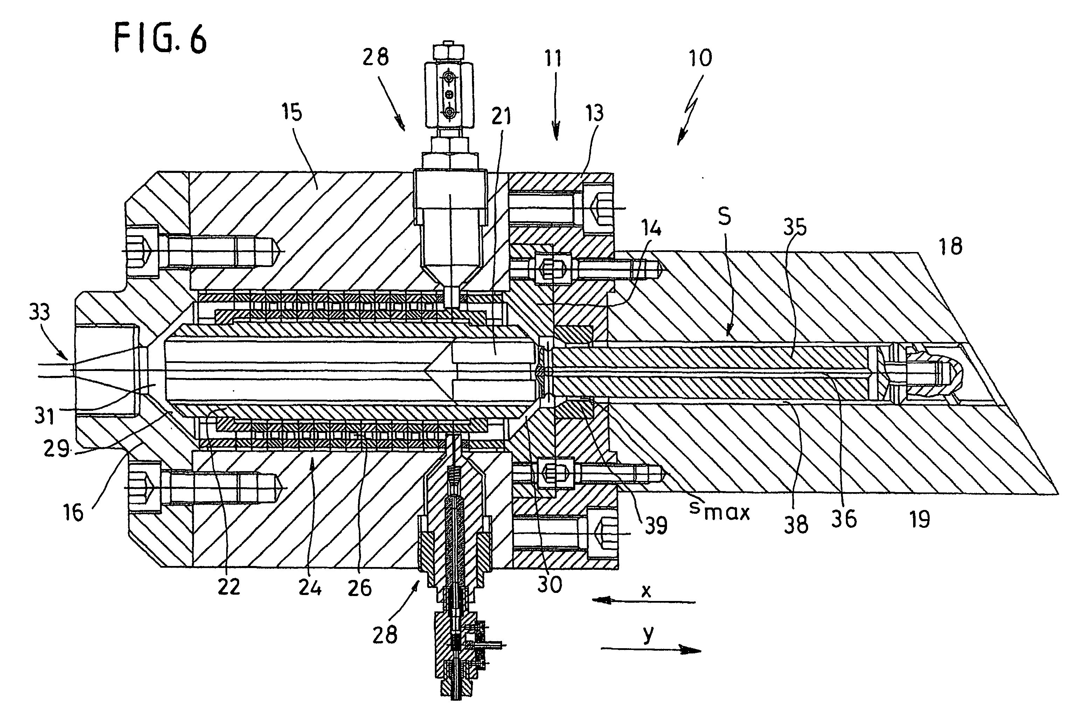

Darüber hinaus ist in geringem Abstand vom Bewegungsbereich des Kolbens 21 im Gehäusebauteil 13 ein den Strömungsquerschnitt des ringraumartigen Strömungskanals 32 verringernder Blendenring 39 angeordnet. Zwischen diesem Blendenring 39 und einer Oberfläche der Welle 35 ergibt sich bei Bewegung der Spritzvorrichtung S bei gefülltem Sammelraum 31 (Endstellung in y-Richtung, s. Fig. 6) ein maximaler Spalt sₘₐₓ und nach der Entleerung des Sammelraums 31 (Endstellung in x-Richtung, s. Fig. 4) ein minimaler Spalt sₘᵢₙ.

Diese spezielle Anordnung verhindert in jeder Stellung der Spritzvorrichtung S Strömungstoträume dadurch, dass mit zunehmender Bewegung der Spritzvorrichtung S in x-Richtung der Strömungswiderstand des ringraumartigen Strömungskanals 32 aufgrund der kontinuierlichen Verringerung des Spaltes s sich vergrößert, so dass der an sich längere Strömungsweg durch die Durchgangsbohrung 36, die ringförmige Einschnürung 37 sowie der Rückweg (in y-Richtung) durch den ringraumartigen Strömungskanal 32 hin zum Strömungskanal 30 immer noch einen ähnlichen Strömungswiderstand aufweist wie der vorgenannte kürzere Strömungsweg. Hierdurch wird erreicht, dass tatsächlich die Schmelze, die zuerst die Rückstromsperre 19 verlässt, auch als erstes den Strömungskanal 30 passiert und letztlich den Sammelraum 31 erreicht, so dass sie auch als erstes durch die Düsenbohrung in die Spritzgießform eingepresst wird (First in - first out-Prinzip).

Die einzelnen Stellungen dieses vorherbeschriebenen Spritzaggregats 10 sind in den Fig. 4 bis 6 dargestellt.

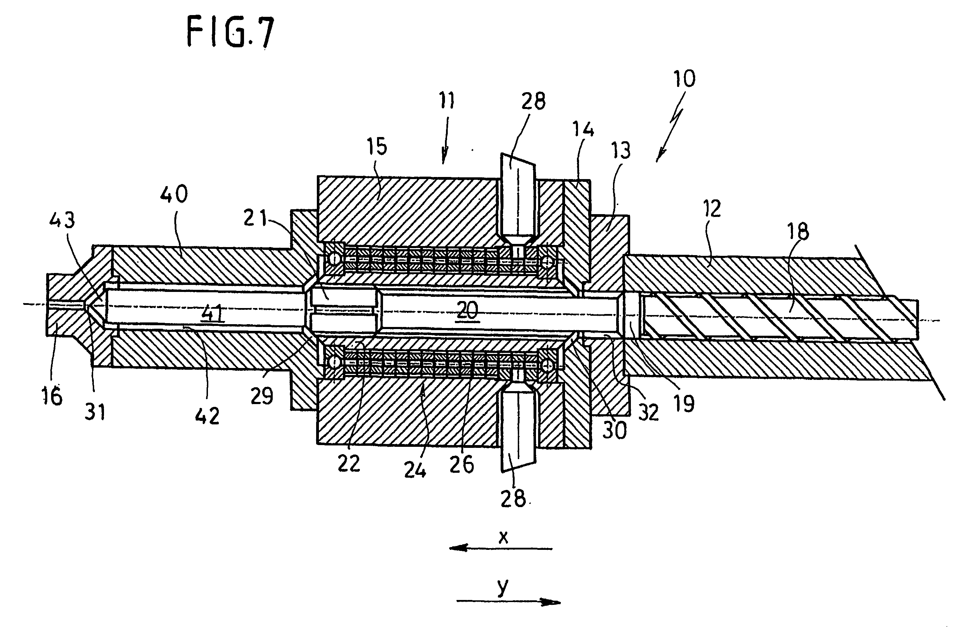

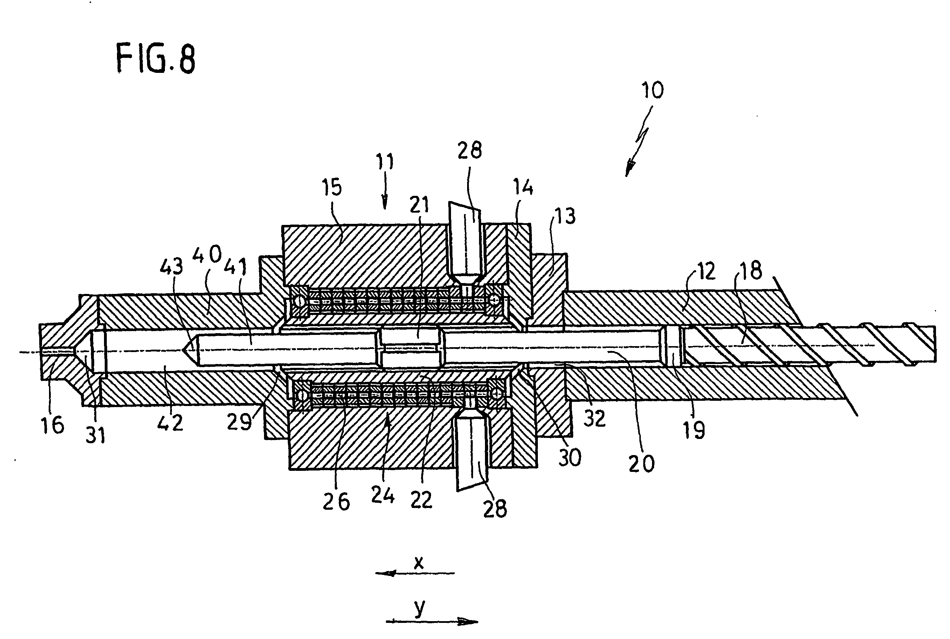

Letztlich ist in den Fig. 7 bis 9 eine weitere Ausführungsform eines Spritzaggregats 10 dargestellt, bei der zwischen dem eine Düsenbohrung 33 aufweisenden Bauteil 16 und dem Bauteil 15 des Gehäuses ein Zwischenbauteil 40 angeordnet ist, mit dem eine wesentliche Verlängerung des Sammelraumes 31 in x-Richtung erfolgt.

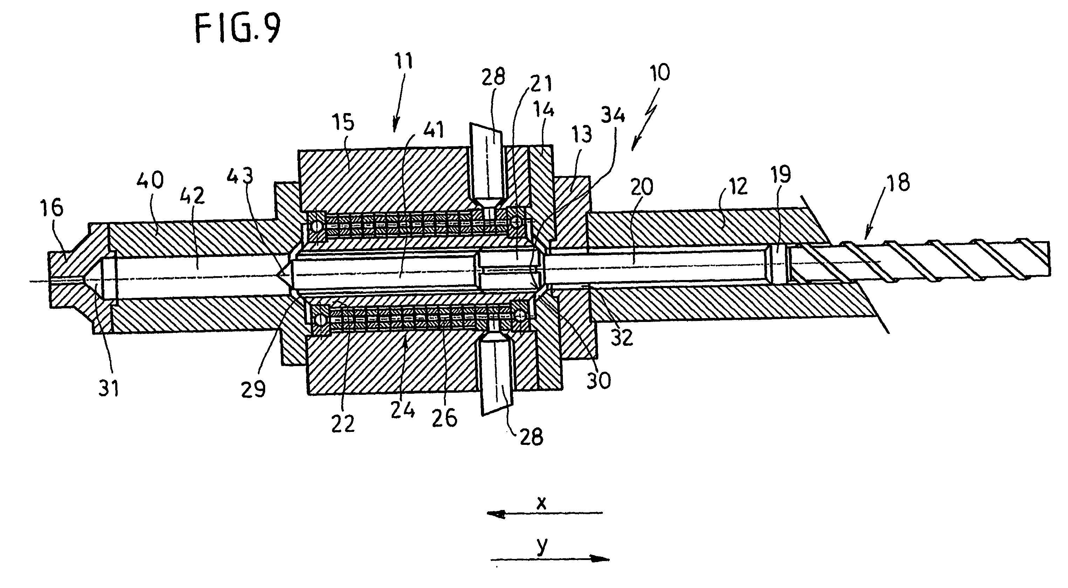

Darüber hinaus ist der Kolben 21 mit einem wellenartigen Ausstoßelement 41 versehen, welches einen geringeren Durchmesser als der Kolben 21 aufweist und so ein Ringraum 42 als Strömungsquerschnitt für die Schmelze verbleibt. Nach dem Ausstoßen der Schmelze aus dem Sammelraum 31 (s. Fig. 7) wird ebenso wie bei den anderen Ausführungsformen die Spritzvorrichtung S wieder in Bewegung gesetzt, so dass eine rotierende Bewegung der Spritzvorrichtung S beginnt. Zugleich wird Schmelze durch die diversen vorgenannten Strömungskanäle 32, 30, 26 und 29 bis in den Ringraum 42 und dann in den Sammelraum 31 zwischen Düsenbohrung 33 und einem freien Ende 43 der Welle 41 transportiert. Zugleich wird aufgrund der zunehmenden Ansammlung von Schmelze im Sammelraum 31 wiederum die gesamte Spritzvorrichtung S kontinuierlich nach hinten in y-Richtung bewegt bis dass die in Fig. 9 dargestellte Endstellung in y-Richtung erreicht wird. Auch bei diesem Spritzaggregat 10 mit vorgebautem Zwischenbauteil ist das vorgenannte "First in - first out"-Prinzip auf vorteilhafte Weise gewährleistet.

## Patentansprüche

1. Spritzaggregat einer Spritzgießmaschine mit einer axial wie auch rotierend in einem Gehäuse angetriebenen, als Kolben/ Schnecke ausgebildeten Spritzvorrichtung, die mit einer Rückstrompseme versehen ist, wobei die Spritzvorrichtung während des Transportes des Kunststoffgranulats der Plastifizierung dient und während des Einpressens der Kunststoffschmelze durch eine Düse in eine Spritzgleßform als Kolben fungiert, und einer Vorrichtung zum Mischen und Dosieren der Kunststoffschmelze, sowie von Zusatzstoffen, wie Farbmittel, Schäummittel, Gleitmittel od. dgL. wobei zwischen der Rückstromspeme (19) der Schnecke (18) und dem Kolben (21) ein Distanzelement (20, 35) angeordnet ist, dessen Länge wenigstens dem Hub (H) der Spritzvorrichtung (S) entspricht und das wenigstens einen Strömungskanal (32, 38) aufweist, durch den in jeder Stellung eine strömungstechnische Verbindung mit einem radial zunächst nach außen und dann parallel zum Bewegungs- und Führungsbereich des Kolbens (21) bis in einen Bereich zwischen Düse (33) und Kolben (21) sich erstreckenden, weiteren Strömungskanal (30/26/29) sichergestellt ist, wobei der Strömungskanal (26) durch die benachbart zum Bewegungs- und Führungsbereich des Kolbens (21) angeordnete Misch- und Dosiereinrichtung (24) verläuft, und wobei die Misch- und Dosiereinrichtung (24) den Kolben (21) zumindest teilweise kreisringförmig umgreift, **dadurch gekennzeichnet, dass** die Misch- und Dosiereinrichtung (24) bezüglich ihrer Rotationsbewegungen mit der Spritzvorrichtung (S) bewegungsverbunden ist, und dass die Misch- und Dosiereinrichtung (24) aus Mischelementen (23, 25), die an einem drehbaren, mit dem Kolben (21) rotationsverbundenen Rohr (22) und am Innendurchmesser des Gehäuses (11) angeordnet sind, sowie mindestens einer Zusatzstoffeinspeisung (18) gebildet wird.

2. Spritzaggregat nach Anspruch 1, **dadurch gekennzeichnet, dass** die Mischelemente (23, 25) unterschiedliche, gegenüberliegende Oberflächen-Gestaltungen, insbesondere Verzahnungen aufweisen.

3. Spritzaggregat nach Anspruch 1 oder 2, **dadurch gekennzeichnet, dass** das Distanzelement aus einer durchgehend varjüngten Welle (20) gebildet wird und dass der die Welle (20) umgebende kreisringförmige Strömungsquerschnitt (32) vollständig dem Transport der Schmelze von der Schnecke (18) hin zur Misch- und Dosiereinrichtung (24) zur Verfügung steht.

4. Spritzaggregat nach Anspruch 1 oder 2, **dadurch gekennzeichnet, dass** das Distanzelement aus einer verjüngten Welle (35) gebildet wird, deren Querschnitt sich ausgehend von der Schnecke (18) zum Kolben (21) hin leicht konisch verringert, dass im geringen Abstand vom Bewegungsbereich des Kolbens (21) im Gehäuse (11) ein den kreisringförmigen Querschnitt (38) verringemder Blendenring (39) angeordnet ist und dass die Welle (35) mit wenigstens einer in Axialrichtung verlaufenden Durchgangsbohrung (36) versehen ist, die einen aus der Schnecke (18) herausführenden Strömungskanal mit einer kolbenseitigen, ringförmigen Einschnürung (37) der Welle (35) verbindet, die eine strömungstechnische Verbindung zwischen der Durchgangsbohrung (36) und dem kreisringförmigen Strömungsquerschnitt (38) herstellt.

5. Spritzaggregat nach einem der vorangehenden Ansprüche, **dadurch gekennzeichnet, dass** dem Bewegungsraum des Kolbens (21) ein zusätzliches, zwischen Düsenbauteil (16) und Gehäusebauteil (15) angeordnetes Zwischenbauteil vorgeordnet wird, welches einen in x-Richtung erweiterten Sammelraum (31) für die Schmelze darstellt und dass der Kolben (21) düsenseitig mit einer verjüngten Welle (41) veisehen ist, die dem Ausstoß der Schmeize dient.

## Claims

1. Injection unit of an injection moulding machine with an injection device driven axially and rotatably in a housing, in the form of a plunger/screw, said injection device being provided with a back-flow lock, wherein the injection device is used for plasticising during the transport of the plastic granulate, and serves as a plunger during the pressing of the plastic melt through a nozzle into an injection mould, and with a device for mixing and metering the plastic melt as well as additives, such as colorants, foaming agents or lubricants or the like, wherein a spacer element (20, 35) is arranged between the back-flow lock (19) of the screw (18) and the plunger (21), the length of which spacer element corresponds at least to the stroke (S) of the injection device (I) and has at least one flow channel (32, 38) for establishing in each position a fluidic communication with a second flow channel (30,26,29) which initially extends radially outwards and then parallel to a movement and guide area of the plunger (21) to an area between the nozzle (33) and the plunger (21), wherein the flow channel (26) runs through the mixing and metering device (24) adjacent to the movement and guide area of the plunger (21), and wherein the mixing and metering device (24) embraces the plunger (21) at least partially in a circular ring shaped manner, **characterised in that** the mixing and metering device (24) is movably connected with respect to its rotational movements with the injection device (I), and **in that** the mixing and metering device (24) is formed from mixing elements (23, 25) which are arranged on a rotatable tube (22) connected rotatably to the plunger (21) and on the inner diameter of the housing (11), and at least one additive feeder (18).

2. Injection unit according to claim 1, **characterised in that** the mixing elements (23, 25) have different, counter surface configurations, in particular teeth.

3. Injection unit according to claim 1 or 2, **characterised in that** the spacer element comprises a continuously tapered shaft (20), and **in that** the annular flow cross section (32) surrounding the shaft (20) is fully available for the transport of melt from the screw (18) up to the mixing and metering device (24).

4. Injection unit according to claim 1 or 2, **characterised in that** the spacer element includes a tapered shaft (35), the cross section of which narrows slightly conically from the screw (18) to the plunger (21), **in that** an aperture ring (39) is disposed in the housing (11) at a slight distance from the movement area of the plunger (21) for reducing the circular cross section (38), and **in that** the shaft (35) is provided with at least one axial throughbore (36) which connects a flow channel extending out from the screw (18) with a plunger-side, annular constriction (37) of the shaft (35) for establishing a fluidic communication between the throughbore (36) and the circular flow cross section (38).

5. Injection unit according to one of the preceding claims, **characterised in that** an intermediate component is arranged between the nozzle component (16) and the housing component (15) before the movement area of the plunger (21), which forms an accumulation chamber (31) in axial direction for the melt, and **in that** the plunger (21) is provided on a nozzle-side with a tapered shaft (41) for the expulsion of plastic melt.

## Revendications

1. Agrégat d'injection d'une presse d'injection dotée d'un dispositif d'injection entraîné de manière axiale et rotative dans un boîtier et ayant la forme d'un piston/d'une vis sans fin, qui est doté d'un clapet anti-retour, moyennant quoi le dispositif d'injection sert à la plastification pendant le transport du granulat en plastique et fait office, pendant l'injection de la matière fondue en plastique à travers une filière d'extrusion dans un moule de moulage par injection, de piston, et d'un dispositif permettant de mélanger et de doser la matière fondue en plastique, ainsi que des additifs, tels que des colorants, des lubrifiants ou semblables, moyennant quoi un élément d'écartement (20, 35) est agencé entre le clapet anti-retour (19) de la vis sans fin (18) et le piston (21), dont la longueur correspond au moins à la course (H) du dispositif d'injection (S) et qui présente au moins un canal d'écoulement (32, 38), à travers lequel dans toute position une liaison qui se rapporte à la technique des fluides est assurée avec un autre canal d'écoulement (30/26/29) s'étirant de manière radiale tout d'abord vers l'extérieur puis parallèlement à la zone de mouvement et de guidage du piston (21) jusqu'à une région située entre la filière d'extrusion (33) et le piston (21), moyennant quoi le canal d'écoulement (26) s'étire à travers le dispositif de mélange et de dosage (24) situé à côté de la zone de mouvement et de guidage du piston (21), et moyennant quoi le dispositif de mélange et de dosage (24) enveloppe au moins partiellement de manière circulaire le piston (21), **caractérisé en ce que** les mouvements du dispositif de mélange et de dosage (24) sont liés avec le dispositif d'injection (S) en raison de ses mouvements de rotation, et **en ce que** le dispositif de mélange et de dosage (24) est constitué d'éléments composés (23, 25) qui sont agencés sur un tuyau rotatif (22), dont la rotation est associée à celle du piston (21) et sur le diamètre interne du boîtier (11), et au moins une ligne d'alimentation d'additif (18) est formée.

2. Agrégat d'injection selon la revendication 1, **caractérisé en ce que** les éléments composés (23, 25) présentent des configurations de surface différentes et opposées, en particulier des engrenages.

3. Agrégat d'injection selon la revendication 1 ou 2, **caractérisé en ce que** l'élément d'écartement est formé par un arbre (20) entièrement conique, et **en ce que** la section mouillée (32) circulaire entourant l'arbre (20) est entièrement à la disposition du transport de la matière fondue de la vis sans fin (18) jusqu'au dispositif de mélange et de dosage (24).

4. Agrégat d'injection selon la revendication 1 ou 2, **caractérisé en ce que** l'élément d'écartement est formé d'un arbre conique (35) dont la coupe transversale se réduit de manière continue et légèrement conique depuis la vis sans fin (18) jusqu'au piston (21), **en ce qu'**une bague de diaphragme(39) rétrécissant la coupe transversale circulaire (38) est agencée dans le petit intervalle de la zone de mouvement du piston (21) dans le boîtier (11) et **en ce que** l'arbre (35) est doté d'au moins un alésage de passage (36) s'étirant dans la direction axiale, lequel relie un canal d'écoulement provenant du piston (18) avec un étranglement circulaire (37) de l'arbre (35) situé sur le côté du piston, qui constitue une liaison qui se rapporte à la technique des fluides entre l'alésage de passage (36) et la section mouillée circulaire (38).

5. Agrégat d'injection selon l'une des revendications précédentes, **caractérisé en ce qu'**un élément intermédiaire supplémentaire, agencé entre l'élément de filière d'extrusion (16) et l'élément de boîtier (15), est agencé devant la zone de mouvement du piston (21), lequel représente une zone de collecte (31) s'élargissant dans la direction x pour la vis sans fin et **en ce que** le piston (21) est doté d'un arbre conique (41) du côté de la filière d'extrusion, qui sert à rejeter la matière fondue.
